# EUROPÄISCHE PATENTSCHRIFT

(11) **EP 0 604 681 B1**
(45) Veröffentlichungstag und Bekanntmachung des Hinweises auf die Patenterteilung: **28.08.1996**
(21) Anmeldenummer: 92122123.0
(22) Anmeldetag: 30.12.1992
(51) Int. Cl.: A01G 25/09

(54) **Düsenausleger für die Beregnung insbes. landwirtschaftlicher Flächen**
Nozzleboom for raining upon especially agricultural surfaces
Bras de buses pour arroser en particulier des surfaces agricoles

(43) Veröffentlichungstag der Anmeldung: 06.07.1994
(73) Patentinhaber: Wollny, Hubertus, D-55234 Bechtolsheim (DE)
(72) Erfinder: Wollny, Hubertus, D-55234 Bechtolsheim (DE)
(74) Vertreter: Rupprecht, Klaus, Dipl.-Ing.

(56) Entgegenhaltungen:
- WO-A-83/02713
- FR-A- 2 254 176
- FR-A- 2 304 412

## Beschreibung

Die Erfindung bezieht sich auf einen Düsenausleger für die Beregnung insbes. landwirtschaftlicher Flächen, der auf einem Fahrgestell angeordnet und längenveränderlich ausgebildet ist, wobei die Düsen ber Zuleitungen mit einer Wasserhauptleitung verbunden sind, und der Ausleger als Scherenelement ausgebildet ist, das mittels einer Antriebseinrichtung betätigbar ist.

Zur Beregnung landwirtschaftlicher Flächen, einschließlich Gartenbauflächen od. dgl. ist es bekannt, Düsenausleger zu benutzen, um Wasser möglichst genau verteilt, sparsam sowie auch energiesparend auf die zu beregnenden Flächen aufzubringen. Die Düsenausleger bestehen in der Regel aus einer räumlichen oder flächigen Fachwerkkonstruktion, die an einem Fahrgestell angeordnet ist, mit dem sie über die zu beregnende Ackerfläche in linearer Richtung bewegt wird. Das Fahrgestell ist hierbei an einer in der Bewegungsrichtung des Düsenauslegers verlegten Wasserleitung der Wasserhauptleitung angeschlossen, die andernends mit einer Beregungsmaschine verbunden ist. Letztere weist eine Trommel auf, auf die die Waserleitung aufgewickelt wird, wenn die Trommel in Drehung versetzt wird. Hierdurch wird die Länge der zuvor ausgelegten Wasserleitung langsam verkürzt, so daß der Düsenausleger über die landwirtschaftliche Fläche ebenso langsam bewegt wird. Auf diese Weise kommt es zu einer gleichmäßigen Beregnung durch das durch die Wasserhauptleitung und die Zuleitungen in die Düsen strömenden und dort austretenden Wassers.

Bisher bekannte Düsenausleger bestehen aus mehrfach zusammenklappbaren oder teleskopisch ineinander schiebbaren Rahmenwerken, die teilweise in der ersten Stufe hydraulisch ausgeklappt und dann von Hand weiter aufgefaltet werden. Trotz allem sind die hiermit verbundenen Arbeitsgänge immer noch zeitaufwendig. In aller Regel sind hierzu zwei Arbeitskräfte erforderlich.

Aus WO-A-8302713 sind scherenartige Düsenaufleger bekannt. Aufgrund des im wesentlichen zweidimensionalen Aufbaus dieser Ausleger neigen sie im ausgefahrenen Zustand zur Deformation, weshalb mit ihnen nur begrenzte Spannweiten erreicht werden können.

Die Aufgabe der Erfindung besteht darin, einen Düsenausleger der eingangs genannten Art zu schaffen, der vergleichsweise schnell und mit einer einzigen Arbeitskraft auseinandergeklappt und in Betriebsbereitschaft gebracht und auf ebensolche Weise umgekehrt wieder in seine Transportstellung zusammengefaltet werden kann, wobei jedoch große Spannweiten erzielt werden sollen.

Diese Aufgabe wird gemäß der Erfindung dadurch gelöst, daß mindestens zwei Scherenelemente im wesentlichen deckungsgleich mit Abstand übereinander angeordnet sind, die mittels Spann- und Stützelementen miteinander verbunden sind. Diese erfindungsgemäße Ausbildung führt zu einer mechanisch sehr stabilen Konstruktion des Düsenauslegers. Sie entspricht in etwa einem räumlichen Tragwerk. Mit dieser Ausbildung sind Spannweiten des erfindungsgemäßen Düsenauslegers von etwa 40 bis etwa 60 m möglich.

Es kann nicht nur eine zweiteilige, sondern auch eine mehrteilige Schere gemäß der Erfindung verwendet werden. Auch bei Einsatz eines solchen mehrteiligen Scherenelementes mit räumlichen Tragwerken ist es einer einzigen Bedienungsperson möglich, daß Scherenelement, also den gesamten Düsenausleger auszufahren und auch wieder einzuklappen. Dies geschieht über ein Antriebseinrichtung, die an einem einzigen zweiteiligen Scherenelement angreift. Da die Bauteile des Scherenelementes miteinander verbunden sind, wird die Bewegung des einen Scherenteiles auf das gesamte Scherenelement übertragen.

Nach einem weiteren Merkmal der Erfindung ist vorgesehen, daß je zwei übereinander angeordnete Scherenelemente symmetrisch an den beiden parallel zur Fahrtrichtung des Düsenausrichters verlaufenden Seiten des Fahrgestells vorgesehen sind. Aus mechanisch-konstruktiven Überlegungen folgt, daß mit dieser zweiteiligen Konstruktion die maximal mögliche Spannweite des Düsenauslegers ermöglicht wird. Auch in diesem Falle ist nur eine einzige Antriebsvorrichtung erforderlich, die in der Regel eine Seilwinde oder ein wasserhydraulisch betätigter Flüssigkeitsmotor sein wird. Der Flüssigkeitsmotor kann an das Wasserversorgungssystem des zu verteilenden Wasser angeschlossen sein.

Schließlich liegt es noch im Rahmen der Erfindung, wenn das bzw. die Scherenelemente horizontal verschwenkbar am Fahrgestell gelagert sind. Hierdurch kann der Düsenausleger zusätzlich zu seiner Linearbewegung noch eine pendelnde Schwenkbewegung ausführen. Auf diese Weise wird während der Zeiteinheit des auszubringende Wasser über zwei Teilkreise oder Kreissegmente verteilt, deren Fläche weitaus größer als der Streifen ist, der mittels eines starr am Fahrgestell angeordneten Düsenauslegers bewässerbar ist. Somit steht dem ausgebrachten Wasser eine größere Zeit zum Eindringen in den Boden zur Verfügung. Der Boden kann das Wasser aufnehmen. Pfützenbildung wird vermieden.

Weitere Einzelheiten, Merkmale und Vorteile der Erfindung ergeben sich aus der folgenden Beschreibung mehrerer Ausführungsbeispiele sowie anhand der Patentansprüche und der schematischen Zeichnung. Es zeigen:
- Fig. 1: eine teilweise Stirnansicht des Düsenauslegers gemäß der Erfindung im ausgefahrenen Zustand;
- Fig. 2: eine Draufsicht auf den Gegenstand der Fig. 1;
- Fig. 3: eine Seitenansicht des Gegenstands der Fig. 1 im zusammengeklappten Zustand;
- Fig. 4: eine teilweise Draufsicht auf den Gegenstand der Fig. 3;
- Fig. 5: eine Draufsicht auf eine abgeänderte Ausführungsform des Gegenstandes der Fig. 1;
- Fig. 6 und 7: Einzelheiten zur Ausführungsform nach Fig. 5.

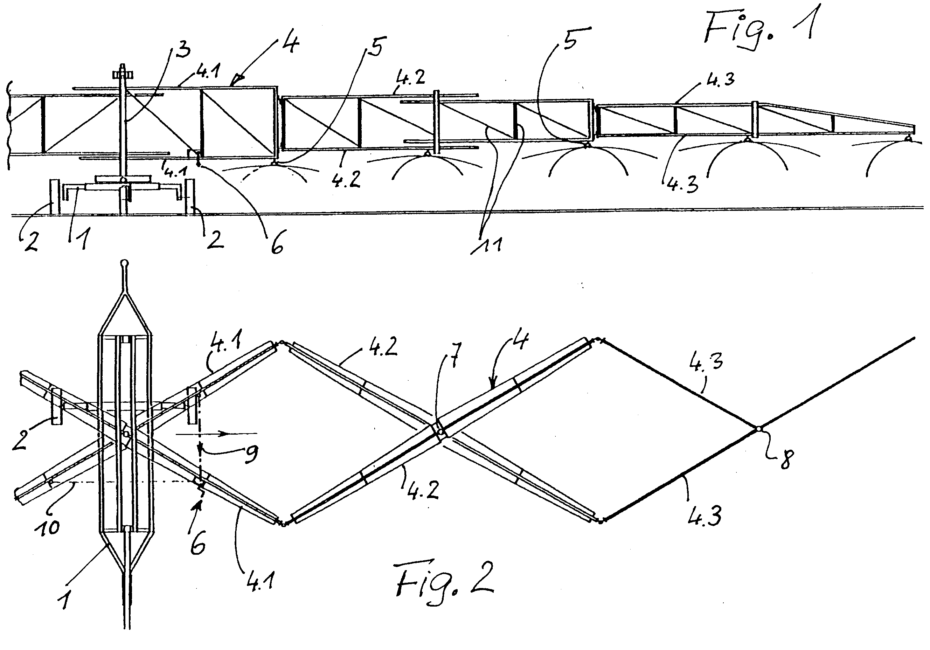

Gemäß Fig. 1 besteht die erfindungsgemäße Vorrichtung grundsätzlich aus einem Düsenausleger 4 und einem Fahrgestell 1. Das Fahrgestell 1 weist Räder 2 auf, mit denen der Düsenausleger 4 verfahrbar ist. In der Regel erfolgt dies über eine auf dem Boden verlegte Schlauchleitung, über die dem Düsenausleger Wasser zugeführt wird. Die Schlauchleitung ist im Bereich des Fahrgestell 1 an Zuleitungen angeschlossen, die am Ausleger 4 angeordnet sind und Düsen 5 Wasser zuführen, welches in der angedeuteten Weise auf den Boden abgegeben wird. Schlauchleitungen und Zuleitungen sind nicht dargestellt, da es sich auch in Verbindung mit der hier beschriebenen Technik um bekannte Einrichtungen handelt.

Die am Boden verlegte Schlauchleitung ist andernends an der Trommel einer Beregnungsmaschine befestigt. Wird die Trommel in Drehung versetzt, so wirkt die Schlauchleitung gleichzeitig als Zugelement zur Bewegung des Düsenauslegers 4 über die zu bewässernde landwirtschaftliche Fläche.

Wie sich aus den Fig. 1 und 2 ergibt, ist der Düsenausleger 4 als Scherenelement ausgebildet. Zwei erste Scherenteile 4.1 sind an einer Lagerachse 3 des Fahrgestells 1 angelenkt. Wie sich insbesondere aus Fig. 2 ergibt, sind an den Enden der Scherenteile 4.1 wiederum zweite Scherenteile 4.2 angelenkt, die im Gelenkpunkt 7 miteinander verbunden sind. Andernends sind nochmals Scherenteile 4.3 an die Scherenteile 4.2 angelenkt. Wie aus Fig. 2 ersichtlich, endet ein Scherenteil 4.4 im Bereich des Gelenkpunktes 8. Eine Weiterführung ist nicht erforderlich, da mit der demgegenüber doppelten Länge des anderen Scherenteils 4.3 die gewünschte Breite des Düsenauslegers 4 erzielt ist.

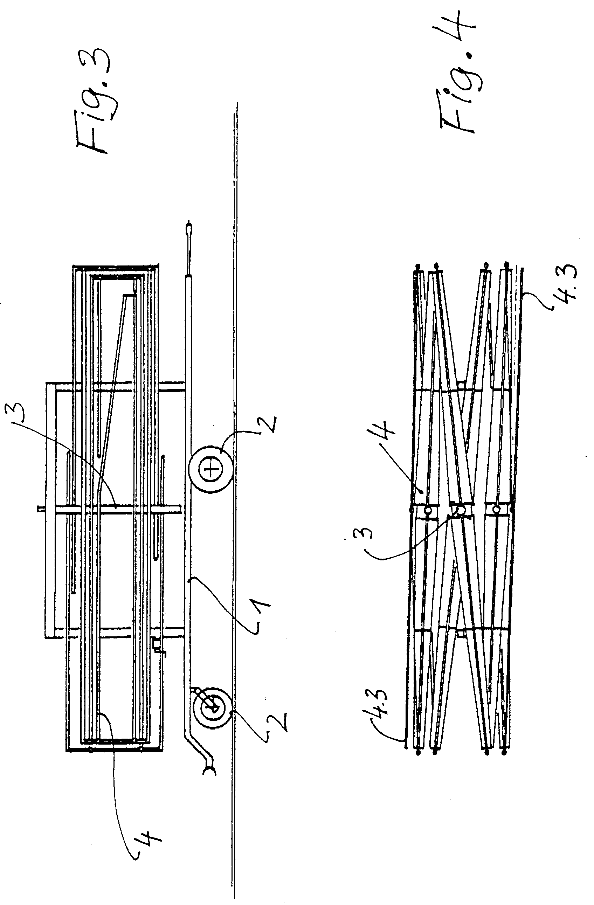

An den an der Lagerachse 3 angelenkten Scherenteilen 4.1 ist eine Antriebsvorrichtung 6 vorgesehen. Bei dem Ausführungsbeispiel nach den Fig. 1 und 2 ist dies eine Seilwinde. Ein Seilzug 9 ist zum korrespondierenden Scherenteil 4.1 auf der selben Seite bezüglich der Lagerachse 3 geführt. Ein weiterer Seilzug 10 führt ebenfalls zum korrespondierenden Scherenteil 4.1, jedoch auf der der Lagerachse gegenüberliegenden Seite. Wird der Seilzug 9 über die Antriebseinrichtung 6 verkürzt, so kommt es zum Ausfahren des Düsenauslegers 4 in die in den Fig. 1 und 2 gezeigte ausgefahrene Stellung. Wird hingegen der Seilzug 10 verkürzt, so wird der Düsenausleger 4 eingefahren oder eingeklappt. Der Düsenausleger 4 ist in seinem zusammengeklappten Zustand in den Fig. 3 und 4 dargestellt. Die in Fig. 4 gewählte Darstellung gibt den Düsenausleger 4 alleine, also ohne Fahrgestell 1 usw. in seinem eingefahrenen Zustand wieder.

Wie insbesondere aus Fig. 1 ersichtlich ist, sind jeweils zwei Scherenteile 4.1 bis 4.3 deckungsgleich mit Abstand übereinander vorgesehen. Die jeweils zueinander korrespondierenden Scherenteile sind mit Spann- bzw. Stützgliedern miteinander verbunden. Auf diese Weise erhält man eine räumlich erstreckte Scherenkonstruktion, die erhöhte mechanische Festigkeit aufweist. Auf diese Weise ist es möglich, Spannweiten von etwa 40 bis etwa 60 m des gesamten Düsenauslegers zu erzielen.

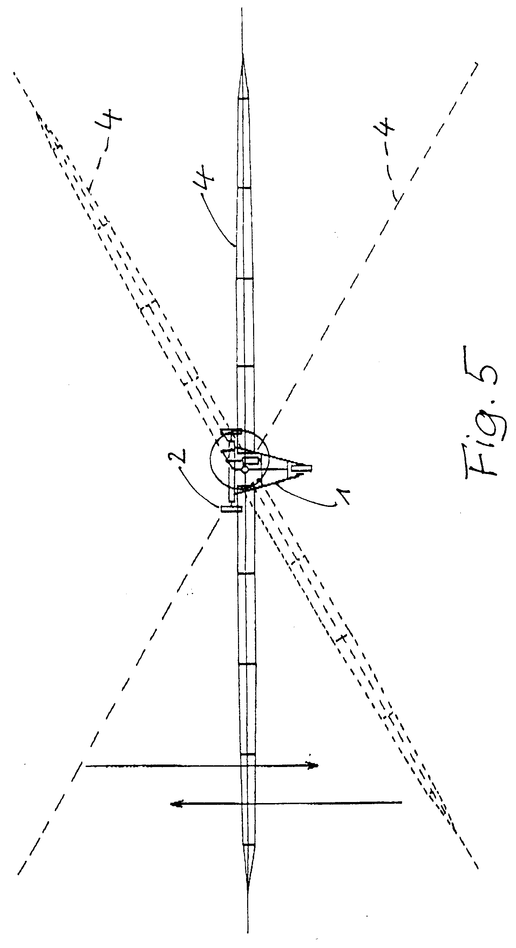

Aus der Fig. 5 ergibt sich eine Modifikation des vorstehend beschriebenen Ausführungsbeispiels. Gemäß Fig. 5 ist der Ausleger 4 zur Ausführung einer horizontalen Pendelbewegung an der Lagerachse 3 angeordnet. Mittels einer vorzugsweise wasserhydraulisch betätigten Antriebsvorrichtung kann der Ausleger 4 aus seiner durchgezogen dargestellten Grundstellung in die gestrichelt dargestellten Endstellungen während seiner Linearbewegung wechselweise verschwenkt werden, wodurch das zu verregnende Wasser auf eine größere Fläche pro Zeiteinheit ausgebracht wird, als die bei einer ausschließlich linearen Bewegung des Düsenauslegers 4 der Fall ist.

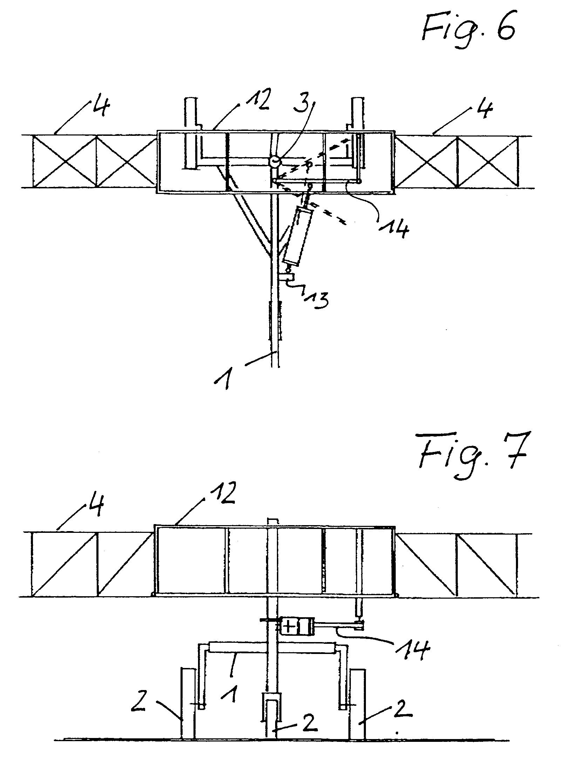

Die Fig. 6 und 7 geben Einzelheiten der Antriebsvorrichtung für diese Pendelbewegung gemäß der Fig. 5 wieder.

Wie in den Fig. 6 und 7 gezeigt, bildet ein Mittelteil 12 einen integralen Bestandteil des Düsenauslegers 4. Diese beiden Teile sind fest miteinander verbunden. Ein am Fahrgestell 1 über einen Ansatz 13 angelenkter Flüssigkeitsmotor, der über eine Zuleitung von der Wasserversorgung der Düsen des Düsenauslegers gespeist ist, ist andernends an einer Strebe 14 des Mittelteils 12 angelenkt. Bei Betätigung des Flüssigkeitsmotors, einer Kolben-Zylinder-Anordnung, kommt es zum Aus- bzw. Einfahren des Kolbenstößels, wobei die Strebe 14 und mithin der Ausleger 4 um seine Lagerachse 3 verschwenkt wird, und zwar in die in Fig. 6, einer Draufsicht auf die Vorrichtung, gezeigten Stellungen. Auf diese Weise wird die erwünschte Pendelbewegung gemäß Fig. 5 bei hin- und hergehendem Kolbenstößel bewirkt.

## Patentansprüche

1. Düsenausleger (4) für die Beregnung insbes. landwirtschaftlicher Flächen, der auf einem Fahrgestell (1) angeordnet und längenveränderlich ausgebildet ist, wobei die Düsen über Zuleitungen mit einer Wasserhauptleitung verbunden sind, und der Ausleger (4) als Scherenelement (4.1 bis 4.3) ausgebildet ist, das mittels einer Antriebseinrichtung betätigbar ist, dadurch gekennzeichnet, daß mindestens zwei Scherenelemente (4.1 bis 4.3) im wesentlichen deckungsgleich mit Abstand übereinander angeordnet sind, die mittels Spann- und Stützelementen (11) miteinander verbunden sind.

2. Ausleger nach Anspruch 1, dadurch gekennzeichnet, daß je zwei übereinander angeordnete Scherenelemente (4.1 bis 4.3) symmetrisch an den beiden parallel zur Fahrtrichtung des Düsenauslegers (4) verlaufenden Seiten des Fahrgestells (1) vorgesehen sind.

3. Ausleger nach Anspruch 1 oder 2, dadurch gekennzeichnet, daß das Scherenelement (4.1 bis 4.3) horizontal verschwenkbar am Fahrgestell (1) gelagert ist.

4. Ausleger nach einem der Ansprüche 1 bis 3, dadurch gekennzeichnet, daß die Antriebseinrichtung (6) eine Seilwinde ist.

5. Ausleger nach Anspruch 1 bis 3, dadurch gekennzeichnet, daß die Antriebseinrichtung wasserhydraulisch aus der vorhandenen Wasserversorgung beaufschlagbar ist.

## Claims

1. Nozzle boom (4) for sprinkling agricultural areas, in particular, which is arranged on an undercarriage (1) and is of adjustable-length design, the nozzles being connected by feedlines to a main water line, and the boom (4) being designed as a lazy-tongs element (4.1 to 4.3) which can be actuated by means of a driving device, characterized in that at least two lazy-tongs elements (4.1 to 4.3) are arranged in an essentially congruent manner and at a distance apart one above the other, being connected to one another by means of tensioning and supporting elements (11).

2. Boom according to Claim 1, characterized in that in each case two lazy-tongs elements (4.1 to 4.3) arranged one above the other are provided symmetrically on the two sides of the undercarriage (1) which run parallel to the direction of travel of the nozzle boom (4).

3. Boom according to Claim 1 or 2, characterized in that the lazy-tongs element (4.1 to 4.3) is mounted in such a way as to be horizontally pivotable on the undercarriage (1).

4. Boom according to one of Claims 1 to 3, characterized in that the driving device (6) is a cable winch.

5. Boom according to Claim 1 to 3, characterized in that the driving device can be supplied with hydraulic pressure from the existing water supply.

## Revendications

1. Bras porte-gicleurs (4) pour l'arrosage, en particulier de surfaces agricoles, qui est disposé sur un châssis mobile (1) et qui est de longueur variable, dans lequel les gicleurs sont raccordés à une conduite d'eau principale par l'intermédiaire de conduites d'amenée et le bras (4) est constitué par un élément à leviers croisés (4.1 à 4.3), oui peut être actionné par un dispositif de commande, caractérisé en ce qu'au moins deux éléments à leviers croisés (4.1 à 4.3) sont disposés à distance l'un au-dessus de l'autre avec un recouvrement essentiellement identique, et qui sont reliés l'un à l'autre au moyen d'éléments de traction et de support (11).

2. Bras suivant la revendication 1, caractérisé en ce qu'il est prévu deux éléments à leviers croisés (4.1 à 4.3) disposés l'un au-dessus de l'autre symétriquement sur chacun des deux côtés du châssis mobile (1) orientés parallèlement à la direction du déplacement du bras porte-gicleurs (4).

3. Bras suivant la revendication 1 ou 2, caractérisé en ce que l'élément à leviers croisés (4.1 à 4.3) est monté de façon horizontalement pivotante sur le châssis mobile (1).

4. Bras suivant l'une quelconque des revendications 1 à 3, caractérisé en ce que le dispositif de commande (6) est un treuil à câble.

5. Bras suivant l'une quelconque des revendications 1 à 3, caractérisé en ce que le dispositif de commande peut être actionné hydrauliquement à l'eau à partir de l'alimentation en eau existante.
